# NEUE EUROPÄISCHE PATENTSCHRIFT

(11) **EP 0 649 440 B2**
(45) Veröffentlichungstag und Bekanntmachung des Hinweises auf die Entscheidung über den Einspruch: **02.05.2001**
(45) Hinweis auf die Patenterteilung: 05.02.1997
(21) Anmeldenummer: 93914738.5
(22) Anmeldetag: 28.06.1993
(51) Int. Cl.: C08G 18/66, C08G 18/48, C08G 18/40, C08J 9/14, C08K 5/00

(54) **VERFAHREN ZUR HERSTELLUNG VON HARTEN URETHANGRUPPEN UND ÜBERWIEGEND ISOCYANURATGRUPPEN AUFWEISENDEN SCHAUMSTOFFEN**
PROCESS FOR PRODUCING HARD FOAMS CONTAINING URETHANE GROUPS AND MAINLY ISOCYANURATE GROUPS
PROCEDE DE PRODUCTION DE MOUSSES DURES CONTENANT DES GROUPES URETHANNES ET SURTOUT DES GROUPES ISOCYANURATES

(30) Priorität: 09.07.1992 DE 4222519
(43) Veröffentlichungstag der Anmeldung: 26.04.1995
(73) Patentinhaber: BAYER AG, 51368 Leverkusen (DE)
(72) Erfinder: WIEDERMANN, Rolf, D-51519 Odenthal-Voiswinkel (DE); WENDEL, Stephan, D-51373 Leverkusen (DE); SCHMITZ, Wolfgang, D-51519 Odenthal-Blecher (DE)
(86) Internationale Anmeldenummer: EP9301651
(87) Internationale Veröffentlichungsnummer: WO9401479

(56) Entgegenhaltungen:
- EP-A- 0 199 938
- EP-A- 0 256 252
- EP-A- 0 394 769
- EP-A- 0 421 269
- EP-A- 0 463 493
- EP-A- 0 477 920
- WO-A-92/16573
- FR-A- 2 193 052
- US-A- 4 692 477
- Cellular Polymers 8(5), 1989, 387-400
- Proceedings Polyurethanes Wordl Congress, 1987, 262-265
- J. Cell Plastics, 21(1), 1985, 58-64
- J. Fire Retardant Chem., 9(4), 1982, 245-255
- Polymethane Handbook, Hanser Publishers, 1985, p. 58

## Beschreibung

Die vorliegende Erfindung betrifft ein Verfahren zur Herstellung flammgeschützter, FCKW-freier PolyisocyanuratHartschaumstoffe.

Die Herstellung von halogenfreien Polyisocyanurat-Hartschäumen unter Verwendung von Wasser und Kohlenwasserstoffen als Treibmittel ist bekannt. Die Verwendung von Wasser als Treibmittel hat den Nachteil, daß durch die Bildung von Polyhamstoff-Strukturen (als Folge der Reaktion von Isocyanat mit Wasser, unter Freisetzung von Kohlendioxid) die Oberfläche der Schaumstoffe versprödet (Oberflächensprödigkeit), wodurch die Haftung zwischen Schaumstoff und Deckschicht negativ beeinflußt wird.

Durch die alleinige Verwendung von Kohlenwasserstoffen als Treibmittel wird andererseits die Oberflächensprödigkeit zwar verhindert, zum Erhalt der Flammwidrigkeit muß jedoch der Anteil an Flammschutzmitteln, die üblicherweise als Weichmacher wirken, erhöht werden, so daß rein Kohlenwasserstoff-getriebene Hartschaumstoffe im allgemeinen nicht dimensionsstabil sind und Schrumpf/Schwund zeigen.

In der EP 04 63 493 wird ein Verfahren zur Herstellung von harten Polyurethan-Schaumstoffen, bei dem man Polyisocyanate mit Isocyanat-aktiven Verbindungen, Kettenverlängerungs- und Vernetzungsmittel und an sich bekannten Hilfs- und Zusatzmittel FCKW-frei in Gegenwart einer wäßrigen Lösung von Alkalicarboxylaten umsetzt, beschrieben.

Es wurde nun überraschenderweise gefunden, daß durch die Verwendung von Polyolen mit verzweigten Ketten rein Kohlenwasserstoff-getriebene Polyisocyanurat-Hartschaumstoffe - ohne die geforderte Flammwidrigkeit negativ zu beeinflussen - nicht schrumpfen.

Unter "verzweigte" Ketten sollen lineare Ketten verstanden werden, von denen eine oder mehrere Seitenketten ausgehen, wobei sowohl in der linearen Kette sowie in der Seitenkette neben Kohlenstoffatomen auch Heteroatome enthalten sein können. Diese Definition umfaßt auch lineare Ketten, welche Methyl-Substituenten aufweisen.

Gegenstand der Erfindung ist ein Verfahren zur Herstellung von harten Urethangruppen und überwiegend Isocyanuratgruppen aufweisenden Schaumstoffen durch Umsetzung von
1) Polyisocyanaten mit
2) mindestens zwei gegenüber Isocyanaten aktive Wasserstoffatome aufweisenden Verbindungen vom Molekulargewicht 400 bis 10 000 in Gegenwart von
3) C₁- bis C₆-Kohlenwasserstoffen als alleiniges Treibmittel und von
4) Flammschutzmitteln sowie von
5) Verbindungen mit mindestens zwei gegenüber Isocyanaten reaktionsfähigen Wasserstoffatomen und einem Molekulargewicht von 32 bis 399 als Vernetzer und gegebenenfalls in Gegenwart von
6) an sich bekannten Hilfs- und Zusatzstoffen,
dadurch gekennzeichnet, daß die Komponente 2) verzweigte Ketten aufweist und, daß man sie, das Flammschutzmittel 4) und die Vemetzerkomponente 5) als Formulierung einsetzt, in der
die Komponente 2) in einer Menge von 30 bis 80 Gew.-Teilen,
die Komponente 4) in einer Menge von 10 bis 60 Gew.-Teilen und
die Komponente 5) in einer Menge von 10 bis 20 Gew.-Teilen
enthalten ist, wobei sich die Gew.-Teile dieser Komponenten zu 100 ergänzen, und daß die Umsetzung in einem Kennzahlbereich von 200 - 600 durchgeführt wird.

Erfindungsgemäß bevorzugt ist, daß als Treibmittel eingesetzter C₁-C₆-Kohlenwasserstoff Pentan verwendet wird,
- Cyclopentan verwendet wird,
- eine Mischung von 15-50 Gew.-% n- und/oder Isopentan und 85-50 Gew.-% Cyclopentan verwendet wird,
- Hexan verwendet wird,
- Cyclohexan verwendet wird,
- Gemische aus Pentan, Cyclopentan, Hexan und/oder Cyclohexan verwendet werden.

Für die Herstellung der harten Polyisocyanuratschaumstoffe werden als Ausgangskomponenten eingesetzt:
1. Aliphatische, cycloaliphatische, araliphatische, aromatische und heterocyclische Polyisocyanate, wie sie z.B. von W. Siefken in Justus Liebigs Annalen der Chemie, 562 Seiten 75 bis 136, beschrieben werden, beispielsweise solche der Formel,

   Q(NCO)ₙ,

   in der
   - n: 2 bis 4, vorzugsweise 2, und
   - Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,
   z.B. solche Polyisocyanate, wie sie in der DE-OS 2832253, Seiten 10 bis 11, beschrieben werden.
   Besonders bevorzugt werden in der Regel die technisch leicht zugänglichen Polyisocyanate, z.B. das 2,4-und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4-und/oder 2,6-Toluylendiisocyanat bzw. vom 4,4'-und/oder 2,4'-Diphenylmethandiisocyanat ableiten.
2. Ausgangskomponenten sind ferner Verbindungen mit mindestens zwei gegenüber Isocyanaten reaktionsfähigen Wasserstoffatomen und einem Molekulargewicht in der Regel von 400 bis 10000, die verzweigte Molekularketten aufweisen. Hierunter versteht man neben Aminogruppen, Thiolgruppen oder Carboxylgruppen aufweisenden Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 8000, vorzugsweise 2000 bis 4000, z.B. derartige, mindestens 2, in der Regel 2 bis 8, vorzugsweise 2 bis 4, Hydroxylgruppen aufweisende Verbindungen, wie sie für die Herstellung von homogenen und von zellförmigen Polyurethanen an sich bekannt sind und wie sie z.B. in der DE-OS 2832253, Seiten 11 bis 18, beschrieben werden.
   Vorzugsweise enthält diese Ausgangskomponente bis zu 50 Gew.-%, bezogen auf Gesamtmischung, an Polyester.
3. Als Treibmittel werden C1-C6-Kohlenwasserstoffe, besonders bevorzugt Pentan, verwendet, speziell n- und/ oder Isopentan, ferner Cyclopentan und seine Gemische mit n- und/oder Isopentan.
4. Als Flammschutzmittel werden an sich bekannte Flammschutzmittel, vorzugsweise bei 20°C flüssige Produkte, verwendet.
5. Ausgangskomponenten sind ferner Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2832253, Seiten 19 bis 20, beschrieben.
6. Gegebenenfalls mitverwendet werden an sich bekannte Hilfs- und Zusatzstoffe, wie Emulgatoren und Schaumstabilisatoren. Als Emulgatoren sind solche auf Basis alkoxilierter Fettsäuren und höherer Alkohole bevorzugt.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2834748, 2917480 und 3629308 beschrieben. Auch die aus der Polyurethanchemie an sich bekannten Katalysatoren wie tert.-Amine und/ oder metallorganische Verbindungen können mitverwendet werden.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs-und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solche, die in der US-PS 2764565 beschrieben werden. Einzelheiten über Verarbeitungseinrichtungen, die auch erfindungsgemäß in Frage kommen, werden im Kunststoff-Handbuch, Band VIII, herausgegeben von Vieweg und Höchtlen, Carl-Hanser-Verlag, München 1966, z.B. auf den Seiten 121 bis 205 beschrieben.

Erfindungsgemäß wird im Kennzahlbereich von 200 - 600, vorzugsweise 250-450 gearbeitet.

Bei der Schaumherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage.

In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kem aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekanntgeworden sind.

Selbstverständlich können aber auch Schaumstoffe durch Blockverschäumung oder nach dem an sich bekannten Doppeltransportbandverfahren hergestellt werden.

Die nach der Erfindung erhältlichen Hartschaumstoffe finden dort Anwendung, wo erhöhte Flammwidrigkeit erforderlich ist, wie z.B. im Bauwesen, für die Isolierung des Motorbereichs von Last- und Personenkraftwagen, als Beschichtungsstoffe mit erhöhter Flammwidrigkeit und zur flächigen Isolierung von Motorhauben als Schallschutz.

### Ausführungsbeispiele

### Ausgangsprodukte

### Polyol A (Vergleich):

Es wurde eine Mischung (Formulierung) folgender Komponenten hergestellt:
100 Gew.-Teile eines Polyolgemisches der OH-Zahl 198 bestehend aus:

| | |
|---|---|
| 45 | Gew.-Teilen eines Polyethers mit der OH-Zahl 185, hergestellt durch Umsetzung von Ethylenglykol mit Ethylenoxid |
| 8 | Gew.-Teilen Diethylenglykol mit der OH-Zahl 1060 |
| 5 | Gew.-Teilen eines Polyesters, hergestellt durch Umsetzung von Phthalsäureanhydrid mit Benzylalkohol und Butanol. |
| 27 | Gew.-Teilen des handelsüblichen Flammschutzmittels Disflamoll® DPK (Ciba Geigy Plastics and Additives Co.) |
| 15 | Gew.-Teilen eines Polyesters mit der OH-Zahl 200, hergestellt durch Umsetzung von Adipinsäure und Phthalsäureanhydrid mit Diethylenglykol |

### Polyol B (erfindungsgemäß):

Es wurde eine Mischung (Formulierung) folgender Komponenten hergestellt:
100 Gew.-Teile eines Polyolgemisches der OH-Zahl 168 bestehend aus:

| | |
|---|---|
| 27 | Gew.-Teilen des handelsüblichen Flammschutzmittels Disfiamoll® DPK (Ciby Geigy Plastics and Additives Co.) |
| 12 | Gew.-Teilen eines Polyethers der OH-Zahl 880, hergestellt durch Umsetzung von Trimethylolpropan mit Propylenoxid |
| 50,5 | Gew.-Teilen eines Polyethers der OH-Zahl 45, hergestellt durch Umsetzung von Trimethylolpropan mit Propylenoxid und Ethylenoxid. |
| 10,5 | Gew.-Teilen eines Polyethers der OH-Zahl 380, hergestellt durch Umsetzung von Trimethylolpropan mit Propylenoxid |

### Polyol C (erfindunqsqemäß):

Es wurde eine Mischung (Formulierung) folgender Komponenten hergestellt:
100 Gew.-Teile eines Polyolgemisches der OH-Zahl 212 bestehend aus:

| | |
|---|---|
| 27 | Gew.-Teilen des handelsüblichen Flammschutzmittels Disflamoll® DPK (Ciba Geigy Plastics and Additives Co.) |
| 13 | Gew.-Teilen eines Polyethers der OH-Zahl 880, hergestellt durch Umsetzung von Trimethylolpropan mit Propylenoxid |
| 40 | Gew.-Teilen eines Polyethers der OH-Zahl 56, hergestellt durch Umsetzung von Propylenglykol mit Propylenoxid |
| 10 | Gew.-Teilen eines Polyethers der OH-Zahl 380, hergestellt durch Umsetzung von Trimethylolpropan mit Propylenoxid |
| 10 | Gew.-Teilen eines Polyesters der OH-Zahl 370, hergestellt durch Umsetzung von Adipinsäure, Phthalsäureanhydrid, Ölsäure und Trimethylolpropan |

### Polyol D (erfindunqsqemäß):

Es wurde eine Mischung (Formulierung) folgender Komponenten hergestellt:
100 Gew.-Teile eines Polyolgemisches der OH-Zahl 215 bestehend aus:

| | |
|---|---|
| 27 | Gew.-Teilen des handelsüblichen Flammschutzmittels DEEP (Diethylethylphosphonat) |
| 13 | Gew.-Teilen eines Polyesters der OH-Zahl 370, hergestellt durch Umsetzung von Adipinsäure, Phthalsäureanhydrid, Ölsäure und Trimethylolpropan |
| 10 | Gew.-Teilen eines Polyethers der OH-Zahl 880, hergestellt durch Umsetzung von Trimethylolpropan mit Propylenoxid |
| 25 | Gew.-Teilen eines Polyesters der OH-Zahl 210, hergestellt durch Umsetzung von Adipinsäureanhydrid, Phthalsäureanhydrid, Glycerin und Propylenglykol |
| 20 | Gew.-Teilen eines Polyethers der OH-Zahl 56, hergestellt durch Umsetzung von Propylenglykol mit Propylenoxid |
| 5 | Gew.-Teilen eines Polyesters der OH-Zahl 300, hergestellt durch Umsetzung von Phthalsäureanhydrid mit Diethylenglykol und Ethylenoxid |

**Tabelle 1**

| (Vergleich) | | |
|---|---|---|
| Rezeptur in Gew.-Teilen | | |
| Vergleichsbeispiele | 1 | 2 |
| Polyol A | 98 | 98 |
| Dimethylcyclohexylamin | 0,14 | 0,18 |
| Kaliumacetat-Lösung (1) | 0,54 | 0,7 |
| Cyclopentan | 8 | 12,5 |
| Stabilisator B1605 (Bayer AG) | 2 | 2 |
| Polyisocyanat (Roh-MDI, Desmodu® 44V20, Bayer AG) | 103 | 166 |
| Kennzahl | 219 | 351 |
| Rohdichte [kg/m³] | 42 | 39 |
| Haftung der Papierdeckschicht nach 24 Stunden | gut | gut |
| ÷⃝Flammhöhe im Kleinbrennertest DIN 4102 [mm] | 130 | 120 |
| Klassifizierung nach DIN 4102 | B2 | B2 |
| Dimensionsstabilität | Schrumpf | (weniger) Schrumpf |
| Oberflächensprödigkeit | keine | keine |

| | | |
|---|---|---|
| (1) 25 %ige Lösung in Diethylenglykol | | |

Die Ergebnisse in der Tabelle 1 zeigen, daß durch die alleinige Verwendung von Kohlenwasserstoffen als Treibmittel bei der Verschäumung von Polyolen mit unverzweigten Molekülketten mit Polyisocyanaten zu Polyisocyanuratschaumstoffen die Oberflächensprödigkeit vollständig beseitigt werden kann, die Schäume jedoch nicht dimensionsstabil sind.

**Tabelle 2**

| (erfindungsgemäß): | | | | | |
|---|---|---|---|---|---|
| Rezeptur in Gew.-Teilen | | | | | |
| Beispiele | 1 | 2 | 3 | 4 | 5 (Vergleich) |
| Polyol D | - | - | - | 98 | - |
| Polyol C | - | - | 98 | - | 98 |
| Polyol B | 98 | 98 | - | - | - |
| Dimethylcyclohexylamin. | 0,36 | 0,45 | 0,36 | 0,36 | 0,36 |
| Kaliumacetat-Lösung(1) | 1,4 | 1,75 | 1,4 | 1,4 | 1,2 |
| Stabilisator B 1605 (Bayer AG) | 2 | 2 | 2 | 2 | 2 |
| Cyclopentan | 8 | 12,5 | 8,5 | 8,0 | 6,5 |
| Polyisocyanat (Roh-MDI, Desmodur®44V20 (Bayer AG) | 103 | 166 | 116 | 105 | 70 |
| Kennzahl | 244 | 392 | 223 | 200 | 142 |
| Rohdichte [kg/m³] | 42 | 39 | 42 | 42 | 42 |
| Haftung der Papierdeckschicht nach 24 Stunden | gut | gut | gut | gut | gut |
| ÷⃝Flammenhöhe im Kleinbrennertest DIN 4102 [mm] | 135 | 135 | 130 | 135 | 140 |
| Klassifizierung nach DIN 4102 | B2 | B2 | B2 | B2 | B2 |
| Dimensionsstabilität | kein Schrumpf | kein Schrumpf | kein Schrumpf | nahezu kein Schrumpf | Schrumpf |
| Oberflächensprödigkeit | keine | keine | keine | keine | keine |

| | | | | | |
|---|---|---|---|---|---|
| (1) 25 %ige Lösung in Diethylenglykol | | | | | |

Die Ergebnisse der Beispiele 1-4 in der Tabelle 2 zeigen, daß die erfindungsgemäßen Polyole bei der Verschäumung mit Cyclopentan die Brandklasse B2 nach DIN 4102 erreichen und dimensionsstabil sind. Das Beispiel 5 in der Tabelle zeigt, daß Kennzahlen oberhalb von 200 anzuwenden sind.

## Patentansprüche

1. Verfahren zur Herstellung von harten Urethangruppen und überwiegend Isocyanuratgruppen aufweisenden Schaumstoffen durch Umsetzung von
1) Polyisocyanaten mit
2) mindestens zwei gegenüber Isocyanaten aktive Wasserstoffatome aufweisenden Verbindungen vom Molekulargewicht 400 bis 10000 in Gegenwart von
3) C₁- bis C₆-Kohlenwasserstoffen als alleiniges Treibmittel und von
4) Flammschutzmitteln sowie von
5) Verbindungen mit mindestens zwei gegenüber Isocyanaten reaktionsfähigen Wasserstoffatomen und einem Molekulargewicht von 32 bis 399 als Vernetzer und gegebenenfalls in Gegenwart von
6) an sich bekannten Hilfs- und Zusatzstoffen,
dadurch gekennzeichnet, daß die Komponente 2) verzweigte Ketten aufweist und daß man sie, das Flammschutzmittel 4) und die Vernetzerkomponente 5) als Formulierung einsetzt, in der
die Komponente 2) in einer Menge von 30 bis 80 Gew.-Teilen,
die Komponente 4) in einer Menge von 10 bis 60 Gew.-Teilen und
die Komponente 5) in einer Menge von 10 bis 20 Gew.-Teilen
enthalten ist, wobei sich die Gew.-Teile dieser Komponenten zu 100 ergänzen, und daß die Umsetzung in einem Kennzahlbereich von 200 - 600 durchgeführt wird.

2. Verfahren gemäß Anspruch 1, dadurch gekennzeichnet, daß als Treibmittel Pentan verwendet wird.

3. Verfahren gemäß Anspruch 1, dadurch gekennzeichnet, daß als Treibmittel Cyclopentan verwendet wird.

4. Verfahren gemäß Anspruch 1 bis 3, dadurch gekennzeichnet, daß als Treibmittel eine Mischung von 15 - 50 Gew.-% n- und/oder iso-Pentan und 85 - 50 Gew.-% Cyclopentan verwendet wird.

5. Verfahren gemäß Anspruch 1, dadurch gekennzeichnet, daß als Treibmittel Hexan verwendet wird.

6. Verfahren gemäß Anspruch 1, dadurch gekennzeichnet, daß als Treibmittel Cyclohexan verwendet wird.

7. Verfahren gemäß Anspruch 1, dadurch gekennzeichnet, daß als Treibmittel Gemische von Pentan, Cyclopentan, Hexan und/oder Cyclohexan verwendet werden.

## Claims

1. Process for the production of rigid foams containing urethane groups and predominantly isocyanurate groups by the reaction of
1) polyisocyanates with
2) compounds containing at least two hydrogen atoms reactive with isocyanates and having a molecular weight of 400 to 10,000 in the presence of
3) C₁ to C₆ hydrocarbons as sole blowing agent and of
4) flameproofing agents as well as of
5) compounds containing at least two hydrogen atoms reactive with isocyanates and having a molecular weight of 32 to 399 as cross-linking agent and optionally in the presence of
6) known per se auxiliary agents and additives,
characterised in that component 2) has branched chains and that component 2), the flameproofing agent 4) and the cross-linking component 5) are used as a formulation containing
component 2) in a quantity of from 30 to 80 parts by weight,
component 4) in a quantity of from 10 to 60 parts by weight and
component 5) in a quantity of from 10 to 20 parts by weight,
the parts by weight of these components adding up to 100, and that the reaction is carried out within an index range of 200 to 600.

2. Process according to claim 1, characterised in that pentane is used as blowing agent.

3. Process according to claim 1, characterised in that cyclopentane is used as blowing agent.

4. Process according to claims 1 to 3, characterised in that a mixture of 15 to 50 wt.% of n-pentane and/or isopentane and 85 to 50 wt.% of cyclopentane is used as blowing agent.

5. Process according to claim 1, characterised in that hexane is used as blowing agent.

6. Process according to claim 1, characterised in that cyclohexane is used as blowing agent.

7. Process according to claim 1, characterised in that mixtures of pentane, cyclopentane, hexane and/or cyclohexane are used as blowing agent.

## Revendications

1. Procédé pour la préparation de mousses dures présentant des groupes uréthane et essentiellement des groupes isocyanurate, par mise en réaction
1) de polyisocyanates avec
2) des composés présentant au moins deux atomes d'hydrogène actifs vis-à-vis d'isocyanates, d'un poids moléculaire de 400 à 10.000, en présence
3) d'hydrocarbures en C₁-C₆ comme agent moussant unique et
4) d'agents ignifuges, ainsi que
5) de composés contenant au moins deux atomes d'hydrogène aptes à réagir vis-à-vis d'isocyanates et possédant un poids moléculaire de 32 à 399, comme agents de réticulation, et éventuellement en présence
6) d'adjuvants et d'additifs connus en soi,
caractérisé en ce que le composant 2) présente des chaînes ramifiées et en ce qu'on met en oeuvre le composant 2), l'agent ignifuge 4) et le composant de réticulation 5) sous forme d'une formulation dans laquelle
le composant 2) est contenu en une quantité de 30 à 80 parties en poids,
le composant 4) est contenu en une quantité de 10 à 60 parties en poids, et
le composant 5) est contenu en une quantité de 10 à 20 parties en poids,
les parties en poids de ces composants se complétant pour donner 100 parties, et en ce que la mise en réaction est réalisée dans un domaine de nombre caractéristique de 200 à 600.

2. Procédé selon la revendication 1, caractérisé en ce qu'on utilise du pentane comme agent moussant.

3. Procédé selon la revendication 1, caractérisé en ce qu'on utilise du cyclopentane comme agent moussant.

4. Procédé selon les revendications 1 à 3, caractérisé en ce qu'on utilise comme agent moussant, un mélange de 15 à 50% en poids de n- et/ou iso-pentane, et de 85 à 50% en poids de cyclopentane.

5. Procédé selon la revendication 1, caractérisé en ce qu'on utilise de l'hexane comme agent moussant.

6. Procédé selon la revendication 1, caractérisé en ce qu'on utilise du cyclohexane comme agent moussant.

7. Procédé selon la revendication 1, caractérisé en ce que, comme agent moussant, on utilise des mélanges de pentane, de cyclopentane, d'hexane et/ou de cyclohexane.
